**Europäisches Patentamt**

**European Patent Office**

**Office européen des brevets**

(19)

(11) Veröffentlichungsnummer : **0 016 935
B1**

(12)

# EUROPÄISCHE PATENTSCHRIFT

(45) Veröffentlichungstag der Patentschrift :
09.09.81

(51) Int. Cl.³ : **C 04 B   7/44**

(21) Anmeldenummer : **80100586.9**

(22) Anmeldetag : **05.02.80**

(54) **Verfahren und Vorrichtung zur Wärmebehandlung von feinkörnigem Gut, insbesondere von Zementrohmaterial.**

(30) Priorität : **06.02.79 DE 2904379**

(43) Veröffentlichungstag der Anmeldung :
**15.10.80 (Patentblatt 80/21)**

(45) Bekanntmachung des Hinweises auf die Patenterteilung : **09.09.81 Patentblatt 81/36**

(84) Benannte Vertragsstaaten :
**AT BE CH DE FR GB IT**

(56) Entgegenhaltungen :
**DE - A - 1 433 842
DE - A1 - 2 558 506
DE - B - 1 471 371
DE - B2 - 2 356 740
DE - U - 6 810 715**

**Zement-Kalk-Gips, Band 30, Nr. 12, Dezember
1977, WIESBADEN
L. KWECH « Brennverfahren »
Seiten 597 bis 607**

(73) Patentinhaber : **Krupp Polysius AG
Graf-Galen-Strasse 17
D-4720 Beckum (DE)**

(72) Erfinder : **Korte, Bernd
Ennigerstrasse 63
D-4722 Ennigerloh (DE)**
Erfinder : **Kraeft, Wilfried
Kirschweg 12
D-4722 Ennigerloh (DE)**

(74) Vertreter : **Tetzner, Volkmar, Dr.-Ing. Dr. jur.
Van-Gogh-Strasse 3
D-8000 München 71 (DE)**

# 0 016 935

## Verfahren und Vorrichtung zur Wärmebehandlung von feinkörnigem Gut, insbesondere von Zementrohmaterial

Die Erfindung betrifft ein Verfahren zur Wärmebehandlung von feinkörnigem Gut, insbesondere von Zementrohmaterial, unter Verwendung eines von den Abgasen eines Drehrohrofens durchströmten mehrstufigen Zyklonvorwärmers, wobei in eine im untersten Bereich des Zyklonvorwärmers befindliche Vorkalzinationszone hochschwefelhaltiger Brennstoff eingeführt und die gesamte in der Vorkalzinationszone benötigte Verbrennungsluft durch den Drehrohrofen zugeführt wird.

Um bei der Zementherstellung den für das Fertigbrennen benötigten Drehrohrofen kleiner dimensionieren und dadurch die Anlagenkosten verringern zu können, ist es bekannt, die Vorwärmung und Vorerhitzung des Gutes vor Aufgabe in den Drehrohrofen nicht ausschließlich mit den Ofenabgasen durchzuführen, sondern in die heißeste Zone des Vorwärmers zusätzlichen Brennstoff einzuführen. In dieser sog. Vorkalzinationszone wird das Rohmaterial weitgehend kalziniert, wodurch der Drehrohrofen vom größten Teil dieses endothermen Prozesses entlastet wird.

Bei der Weiterentwicklung dieses Vorkalzinationsverfahrens ist man nun in den letzten Jahren im Hinblick auf die steigenden Energiekosten zunehmend dazu übergegangen, im Bereich der Vorkalzinationszone auch minderwertige bzw. Abfallbrennstoffe einzusetzen, beispielsweise Ölschiefer, Bleicherde, Säureharz. Dabei hat sich allerdings herausgestellt, daß die Menge der einzusetzenden minderwertigen Brennstoffe durch ihre chemische Zusammensetzung, insbesondere durch einen hohen Schwefelgehalt, stark begrenzt ist.

Ein Teil des bei der Verbrennung hochschwefelhaltiger Brennstoffe entstehenden Schwefeldioxids setzt sich in der Sinterzone des Drehrohrofens mit den dort verdampften Alkalien zu Alkalisulfat um. Ein weiterer Teil des Schwefedioxids, das in diesen Reaktionen nicht gebunden wird, kann im Vorwärmer bei Temperaturen von etwa 500 bis 1 000 °C mit CaO bzw. $CaCO_3$ zu $CaSO_4$ reagieren. Gelangen dann diese vom Rohmehl aufgenommenen Schwefelverbindungen wieder in die Sinterzone des Drehrohrofens, so werden sie dort teilweise erneut verdampft. Auf diese Weise entsteht im Ofen-Vorwärmer-System ein Schwefelkreislauf, dessen Schwefelkonzentration ein Vielfaches der Eingangskonzentration ist. Er führt bei Verwendung schwefelreicher Rohmaterialien und Brennstoffe leicht zu überaus störenden Anbackungen und Verstopfungen im Vorwärmer, da eutektische Verbindungen mit niedrigem Schmelzpunkt gebildet werden.

Um diesen störenden Schwefelkreislauf zu verringern, ist es bei Brennverfahren ohne Vorkalzination des Rohmateriales bekannt, einen Teil der Ofenabgase vor Einleitung in den Vorwärmer abzuzweigen, mit Frischluft oder Wasser zu kühlen und auf diese Weise die störenden Alkali- und Schwefelverbindungen auszukondensieren (DE-A-21 61 411, DE-B-22 55 068, DE-A-23 45 758). Der abgezweigte und von den Alkali- und Schwefelverbindungen weitgehend befreite Teilgasstrom wird dann entweder verworfen oder einer Vorwärmstufe mit entsprechend niedrigerem Temperaturniveau zugeführt.

Es ist weiterhin bekannt, bei einem Verfahren ohne Vorkalzination des Rohmateriales den gesamten Ofenabgasstrom zunächst zu entstauben, den abgeschiedenen Staub sogleich in den Drehrohrofen zurückzuführen, dann zwecks Kondensation der gasförmigen Alkaliverbindungen einen feinkörnigen kalten Feststoff in den entstaubten Ofenabgasstrom einzuführen und anschließend diesen Feststoff mit den darauf niedergeschlagenen Alkaliverbindungen abzuscheiden und aus dem System zu entfernen (DE-B-14 71 371).

Schließlich ist es bei einem Verfahren mit Vorkalzination des Gutes bekannt, die Abgase des Drehrohrofens zwecks Kondensation der in ihnen enthaltenen flüchtigen Stoffe mit kühler Luft abzukühlen, die hierbei kondensierenden flüchtigen Stoffe mit dem Ofenstaub, an dem sie sich anlagern, abzuscheiden und dann das Gemisch von Ofenabgasen und kühler Luft der Vorkalzinationszone als Verbrennungsluft zuzuführen (DE-B-23 56 740).

All diese vorstehend geschilderten bekannten Verfahren sind mit dem wesentlichen Nachteil eines hohen spezifischen Wärmeverbrauches behaftet. Die Abkühlung der heißen Ofenabgase mittels Frischluft, kühler Luft oder Wasser ist zwar zur Kondensation der Alkaliverbindungen notwendig, bringt jedoch eine ganz erhebliche Abwertung der hochwertigen Abgaswärme mit sich und verschlechtert damit beträchtlich den Wirkungsgrad der Vorwärmung bzw. der Vorkalzination des Gutes.

Der Erfindung liegt daher die Aufgabe zugrunde, unter Vermeidung dieser Nachteile ein Verfahren der eingangs genannten Art so auszubilden, daß sich unter Beibehaltung der grundsätzlichen Vorzüge der Vorkalzination auch bei Einsatz von hochschwefelhaltigem Brennstoff eine wesentliche Entlastung des Schwefelkreislaufs bei geringem Energiebedarf (niedrigem Wärmeverbrauch) ergibt.

Diese Aufgabe wird erfindungsgemäß dadurch gelöst, daß die Ofenabgase vor Eintritt in die Vorkalzinationszone bei Abgastemperatur entstaubt werden und mindestens ein Teil des anfallenden Staubes verworfen wird.

Der Erfindung liegt folgende Erkenntnis zugrunde : Wird die gesamte in der Vorkalzinationszone benötigte Verbrennungsluft durch den Drehrohrofen zugeführt, so ist die Temperatur der Ofenabgase wegen des notwendigen Sauerstoffüberschusses der Ofenabgase deutlich niedriger als bei einem Verfahren ohne Vorkalzination oder als bei einem Vorkalzinationsverfahren unter Verwendung von Kühlerluft. Bei dieser etwas niedrigeren Ofenabgastemperatur liegen nun — wie umfangreiche Versuche bestätigten — die Schwefelverbindungen schon weitgehend als an den Ofenstaub gebundener Feststoff vor, so daß ihre Entfernung aus dem System durch Entstaubung der Ofenabgase möglich ist, ohne daß die Ofenabgase vor dieser Entstaubung abgekühlt werden müßten. Dadurch treten die Ofenabgase mit einem hohen Wärmegehalt in die Vorkalzinationszone ein, was zu einem ausgezeichneten Wirkungsgrad des erfindungsgemäßen Verfahrens führt.

Der mit dem hochschwefelhaltigen Brennstoff in die Vorkalzinationszone eingebrachte Schwefel reagiert hier fast vollständig mit CaO bzw. $CaCO_3$ zu $CaSO_4$ und gelangt mit dem Rohmehl in den Drehrohrofen, wo in der Sinterzone eine Zersetzung ($SO_2$-Abspaltung) erfolgt. Das $SO_2$ wird mit dem Ofengas wieder in Richtung zum Vorwärmer transportiert, wobei es im weniger heißen Temperaturbereich des Drehrohrofens mit dem Ofenstaub unter Bildung von $CaSO_4$ reagiert. Durch Abscheidung des Staubes aus den Ofenabgasen und vollständige oder teilweise Verwerfung des Staubes werden die Schwefeleinnahmen des Vorwärmers wesentlich gemindert. Dadurch verringert sich der Gehalt an Schmelzphase und die Gefahr einer Ansatzbildung. Es ist auf diese Weise möglich, bei absoluter Betriebssicherheit des Verfahrens hochschwefelhaltige Brennstoffe in großen Mengen für die Vorkalzination einzusetzen und gleichzeitig einen sehr guten Wirkungsgrad des Verfahrens (d.h. einen niedrigen spezifischen Wärmeverbrauch) zu erzielen.

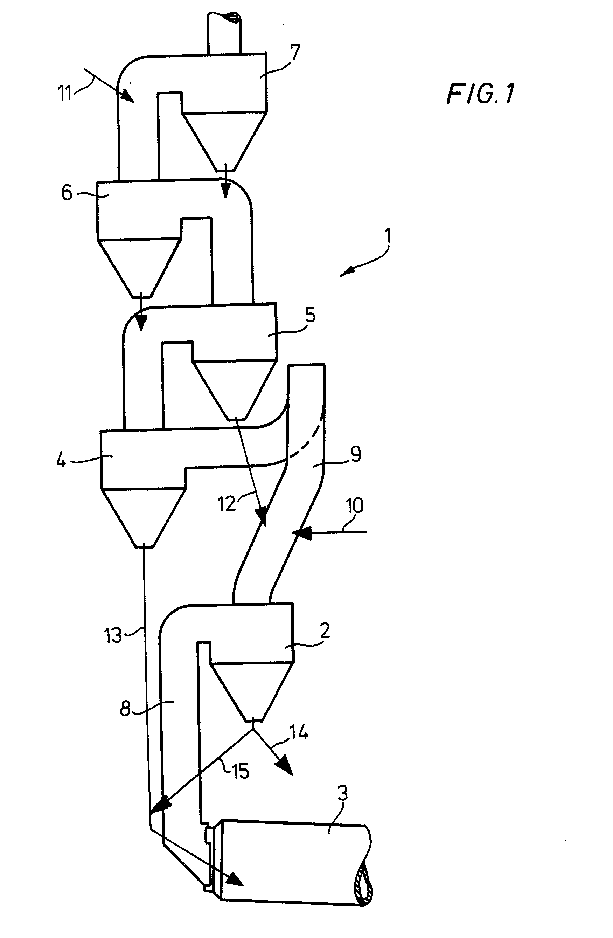

In Fig. 1 ist eine Anlage zur Durchführung des erfindungsgemäßen Verfahrens schematisch veranschaulicht.

Sie enthält einen mehrstufigen Zyklonvorwärmer 1, einen Abscheider 2 sowie einen Drehrohrofen 3. Der Zyklonvorwärmer 1 besteht bei dem dargestellten Ausführungsbeispiel aus vier übereinander angeordneten Zyklonstufen 4, 5, 6, 7, die in üblicher Weise durch ihre Gas- und Gutleitungen miteinander verbunden sind.

Der Drehrohrofen 3 steht über seine Abgasleitung 8 mit dem Abscheider 2 in Verbindung, dessen Abgasleitung 9 die Vorkalzinationszone bildet.

Brennstoff wird der Anlage einerseits im Bereich des Drehrohrofens 3 (und zwar am nicht dargestellten Austragsende des Drehrohrofens) zugesetzt und andererseits (bei 10) in der von der Abgasleitung 9 gebildeten Vorkalzinationszone. Das Gut wird am oberen Ende des Zyklonvorwärmers 1 (bei 11) aufgegeben. Es durchwandert in bekannter Weise im Gegenstrom zu den heißen Gasen nacheinander die Zyklonstufen 7, 6 und 5, gelangt dann (bei 12) in die Vorkalzinationszone und wird nach Abscheidung im Zyklon 4 über eine Gutleitung 13 in den Drehrohrofen 3 eingetragen.

Die Ofenabgase werden über die Abgasleitung 8 zunächst in den Abscheider 2 eingeführt, wo ein großer Anteil des in den Ofenabgasen enthaltenen Staubes mit dem daran gebundenen $SO_2$ abgeschieden wird. Ein wählbarer Teil des abgeschiedenen Staubes wird verworfen (Pfeil 14), der Rest (Pfeil 15) gelangt mit dem in der Zyklonstufe 4 abgeschiedenen Rohmaterial in den Drehrohrofen 3.

Die Erfindung sei weiterhin anhand eines Zahlenbeispieles näher erläutert.

Die Anlage arbeitet mit zwei Brennstoffen : In der Hauptfeuerung (Drehrohrofen) wird Heizöl, Heizwert 41.031 kJ/kg (9 800 kcal/kg), Schwefelgehalt 2 %, eingesetzt und in der Zweitfeuerung (Vorkalzinationszone) schwefelreiches Säureharz, Heizwert 14.235 kJ/kg (3 400 kcal/kg), Schwefelgehalt 17 %.

Daraus ergibt sich folgender Wärmehaushalt der Anlage, wenn 0,15 kg Staub/kg Klinker verworfen werden :

Wärmeeinnahmen :

|  |  |  |
|---|---|---|
| Brennstoff | 3.906 kJ/kg Kl | (933 kcal/kg Kl) |
| Material | 67 kJ/kg Kl | ( 16 kcal/kg Kl) |
| gesamt | 3.973 kJ/kg Kl | (949 kcal/kg Kl) |

Wärmeausgaben :

|  |  |  |
|---|---|---|
| Theoretische Wärme | 2.022 kJ/kg Kl | (483 kcal/kg Kl) |
| Kühlerverluste | 473 kJ/kg Kl | (113 kcal/kg Kl) |
| Mantelverluste | 251 kJ/kg Kl | ( 60 kcal/kg Kl) |
| Bypaßstaubverluste | 147 kJ/kg Kl | ( 35 kcal/kg Kl) |
| Abgasstaubverluste | 33 kJ/kg Kl | ( 8 kcal/kg Kl) |
| Abgasverluste | 929 kJ/kg Kl | (222 kcal/kg Kl) |
| Unbest. Rest | 117 kJ/kg Kl | ( 28 kcal/kg Kl) |
| gesamt | 3.972 kJ/kg Kl | (949 kcal/kg Kl) |

Die Temperaturen und Mengenströme in der Anlage sind dabei wie folgt :

| | | |
|---|---|---|
| Rohmaterial-Aufgabemenge | | 1,76 kg/kg Kl |
| Verworfene Staubmenge | | 0,15 kg/kg Kl |
| Temperatur des verworfenen Staubes | 940 °C | |
| Menge des in den Ofen zurückgeführ- ten Staubes | | 0,35 kg/kg Kl |
| Brennstoff Öl | 2.231 kJ/kg Kl | (533 kcal/kg Kl) |
| Brennstoff Säureharz | 1.675 kJ/kg Kl | (400 kcal/kg Kl) |
| Abgasmenge des Vorwärmers | 1,72 Nm³/kg Kl | |
| Abgastemperatur (Austritt aus Vorwär- mer) | 380 °C | |
| Abgastemperatur im Abscheider (vor der Vorkalzinationszone) | 960 °C | |
| Abgastemperatur im untersten Zyklon des Vorwärmers | 880 °C | |
| Temperatur des dem Drehrohrofen zugeführten Gutes | 860 °C | |

Dadurch, daß 0,15 kg Ofenstaub/kg Klinker verworfen werden, wird die Schwefelbelastung des Vorwärmers stark reduziert und ein störungsfreier Betrieb erreicht. Der Schwefelgehalt im Staub beträgt 17 % $SO_3$.

Es ergibt sich folgende Schwelfelbilanz :

Schwefeleinnahmen :

| | |
|---|---|
| Säureharz 1.675 kJ/kg Kl (400 kcal/kg Kl) | 50,00 g $SO_3$/kg Kl |
| Öl 2.231,6 kJ/kg Kl (533 kcal/kg Kl) | 2,77 g $SO_3$/kg Kl |
| Rohmaterial | 10,00 g $SO_3$/kg Kl |
| Gesamt | 62,77 g $SO_3$/kg Kl |

Schwefelausgaben :

| | |
|---|---|
| Klinker | 18,18 g $SO_3$/kg Kl |
| verworfener Staub | 36,89 g $SO_3$/kg Kl |
| Abgas | 7,70 g $SO_3$/kg Kl |
| Gesamt | 62,77 g $SO_3$/kg Kl |

Bei einer Verwerfung von 0,15 kg Staub pro kg Klinker ergibt sich in der Anlage eine Kreislauf-Konzentration von 75,91 g $SO_3$/kg Kl.

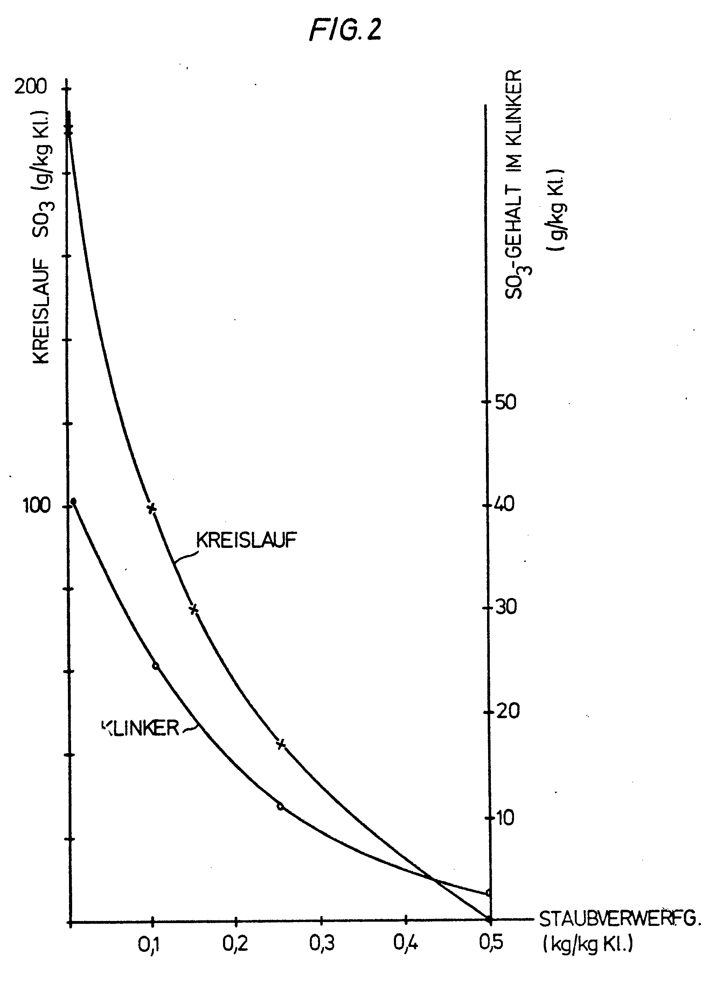

Fig. 2 zeigt den $SO_3$-Gehalt im Kreislauf und im Klinker jeweils in Abhängigkeit von der Menge des verworfenen Staubes. Man erkennt die bereits durch eine Teilstaubverwerfung erreichte wesentliche Verbesserung.

**Ansprüche**

1. Verfahren zur Wärmebehandlung von feinkörnigem Gut, insbesondere von Zementrohmaterial, unter Verwendung eines von den Abgasen eines Drehrohrofens durchströmten mehrstufigen Zyklonvorwärmers, wobei in eine im untersten Bereich des Zyklonvorwärmers befindliche Vorkalzinationszone hochschwefelhaltiger Brennstoff eingeführt und die gesamte in der Vorkalzinationszone benötigte Verbrennungsluft durch den Drehrohrofen zugeführt wird, dadurch gekennzeichnet, daß die Ofenabgase vor Eintritt in die Vorkalzinationszone bei Abgastemperatur entstaubt werden und mindestens ein Teil des anfallenden Staubes verworfen wird.

2. Anlage zur Durchführung des Verfahrens nach Anspruch 1, dadurch gekennzeichnet, daß zwischen dem Drehrohrofen (3) und dem untersten Zyklon (4) des mehrstufigen Zyklonvorwärmers (1) ein Abscheidezyklon (2) angeordnet ist, dessen zum untersten Zyklon (4) des Vorwärmers (1) führende Abgasleitung (9) die Vorkalzinationszone bildet.

**0 016 935**

Claims

1. Method of heat treating fine-grain material, in particular cement raw material, using a multistage cyclone preheater through which the exhaust gases of a rotary tubular kiln pass, high-sulphur-content fuel being introduced into a precalcination zone disposed in the lowermost region of the cyclone preheater and the entire combustion air required in the precalcination zone being supplied by the rotary tubular kiln, characterised in that the kiln exhaust gases are dedusted before entry into the precalcination zone at exhaust gas temperature and at least a portion of the dust precipitating is discarded.

2. Apparatus for carrying out the method according to claim 1, characterised in that between the rotary tubular kiln (3) and the lowermost cyclone (4) of the multistage cyclone preheater (1) a separating cyclone (2) is disposed whose exhaust gas conduit (9) leading to the lowermost cyclone (4) of the preheater (1) forms the precalcination zone.

Revendications

1. Procédé de traitement thermique de matière à granulométrie fine, en particulier de matière première du ciment, à l'aide d'un réchauffeur à cyclones à plusieurs étages dans lequel circulent les gaz évacués d'un four tubulaire rotatif, du combustible à forte teneur en soufre étant introduit dans une zone de précalcination se trouvant dans la partie inférieure du réchauffeur à cyclones et la totalité de l'air comburant nécessaire à la zone de précalcination étant introduite par le four tubulaire rotatif, procédé caractérisé en ce qu'il consiste essentiellement à dépoussiérer les gaz évacués du four avant leur entrée par la zone de précalcination à la température qu'ils ont à la sortie du four et à rejeter ou mettre au rebut au moins une partie de la poussière résultante.

2. Installation pour la mise en œuvre du procédé selon la revendication 1, caractérisée en ce qu'un cyclone collecteur (2), dont la canalisation d'évacuation des gaz (9) menant au cyclone inférieur (4) du réchauffeur (1) forme la zone de précalcination, est disposé entre le four tubulaire rotatif (3) et le cyclone inférieur (4) du réchauffeur à cyclones à plusieurs étages (1).

1/2

FIG.1

FIG.2